# EUROPEAN PATENT SPECIFICATION

(11) **EP 2 524 832 B1**
(45) Date of publication and mention of the grant of the patent: **06.04.2016**
(21) Application number: 12168052.4
(22) Date of filing: 15.05.2012
(51) Int. Cl.: B60J 7/02, B60J 1/20, B60J 7/00

(54) **Roller shade apparatus for vehicle**
Sonnenrollo für ein Fahrzeug
Store enrouleur pour véhicule

(30) Priority: 17.05.2011 JP 2011110701
(43) Date of publication of application: 21.11.2012
(73) Proprietor: AISIN SEIKI KABUSHIKI KAISHA, Kariya-shi, Aichi-ken, 448-8650 (JP)
(72) Inventor: Shiota, Akihito, Kariya-shi, Aichi-ken, 448-8650 (JP); Kitani, Takashi, Kariya-shi, Aichi-ken, 448-8650 (JP); Yoshikawa, Hirotaka, Kariya-shi, Aichi-ken, 448-8650 (JP)
(74) Representative: Winter, Brandl, Fürniss, Hübner, Röss, Kaiser, Polte - Partnerschaft mbB

(56) References cited:
- EP-A1- 1 616 737
- EP-A1- 2 272 699
- DE-A1- 10 019 787
- DE-C1- 19 910 950

## Description

### TECHNICAL FIELD

This disclosure generally relates to a roller shade apparatus for a vehicle.

### BACKGROUND DISCUSSION

A known roller shade apparatus for a vehicle performs a winding of a sheet in a direction where a transparent member forming a transparent range at an opening portion of a vehicle is exposed, and performs a feeding of the sheet in a direction where the transparent member is covered. Such roller shade apparatus is disclosed in JP2011-6011A (which will be hereinafter referred to as Reference 1). The corresponding EP-family document is EP 2 272 699 A. The roller shade apparatus disclosed in Reference 1 includes a pair of guide rails arranged at both side edges of a roof opening portion formed at a vehicle roof in a width direction of the vehicle so as to extend in a longitudinal direction of the vehicle. The roller shade apparatus further includes a light shielding sheet (hereinafter simply referred to as a sheet) that is wound or fed in a state where the sheet is guided by the guide rails. The sheet includes a sheet body portion that is deployable over the substantially entire roof opening portion along with the feeding of the sheet. The sheet also includes a pair of guide members each having a plate shape. The guide members are connected to respective side portions of the sheet body portion in the width direction of the vehicle so as to be movably attached to the guide rails. According to the aforementioned roller shade apparatus, the guide members are guided by the respective guide rails by the winding or feeding of the sheet so that the sheet body portion is deployed or stored.

According to the roller shade apparatus disclosed in Reference 1, in a case where the sheet body portion is deployed, for example, the sheet is held by the guide rails via both of the guide members. In this case, when the guide members are made of resin, for example, the guide members change shape because of an environmental change, which may cause a crease in the sheet body portion.

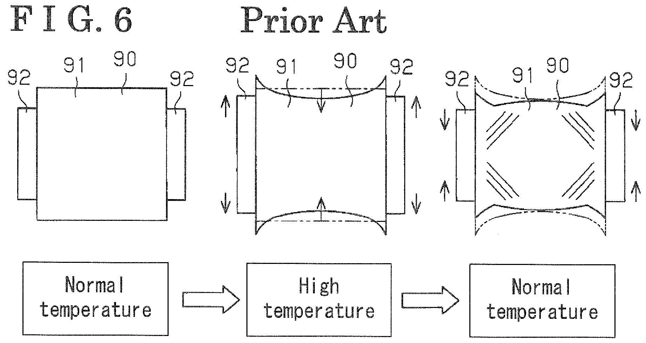

That is, as illustrated in a left-side view in Fig. 6 where the roller shade apparatus is in a normal temperature environment, a sheet body portion 91 and both guide members 92 of a sheet 90 are originally connected to one another without an influence of the shape change of the guide members 92 (i.e., the guide members 92 are each in its original shape). Then, when the roller shade apparatus is shifted to a high temperature environment, both of the guide members 92 change shape so as to be thermally expanded in an extending direction of the guide members 92 relative to the sheet body portion 91 as illustrated in a middle view in Fig. 6. Then, following the aforementioned shape change of the guide members 92, the sheet body portion 91 is forcedly pulled. When the roller shade apparatus is again shifted to or returned to the normal temperature environment, both of the guide members 92 change shape so as to be thermally contracted in the extending direction as illustrated in a right-side view in Fig. 6. The guide members 92 are thus each returned to its original shape. At this time, a looseness is generated in the sheet body portion 91 that is forcedly pulled in the high temperature environment, which results in a crease in the sheet body portion 91. Consequently, a deterioration in appearance of the sheet 90 may occur.

A need thus exists for a roller shade apparatus for a vehicle that restrains a deterioration in appearance of a sheet caused by an environmental change.

### SUMMARY

According to an aspect of this disclosure, a roller shade apparatus for a vehicle includes a sheet provided for light shielding, the sheet moving in a first direction and being wound to cause a transparent member forming a transparent range at an opening portion of the vehicle to be exposed, the sheet moving in a second direction opposite from the first direction and being deployed to cover the transparent member, and first and second guide rails provided at respective side edges of the opening portion in a width direction perpendicular to a moving direction of the sheet, the first and second guide rails extending in the moving direction of the sheet, the first and second guide rails supporting respective side portions of the sheet in the width direction to be guided in the moving direction of the sheet. The sheet includes a sheet body portion being deployable to cover the transparent member in a case where the sheet is fed, and first and second guide members made of resin, the first and second guide members being connected to the respective side portions of the sheet and being movably attached to the first and second guide rails. According to the invention the roller shade apparatus also includes a wire rod made of metal and embedded in each of the first and second guide members over an entire length of the first and second guide members in the moving direction.

The wire rod is arranged and embedded in each of the first and second guide members over the entire length in the moving direction thereof. Thus, a possible shape change of the first and second guide members in the moving direction thereof caused by an environmental change is restrained by the wire rod having a relatively smaller linear expansion coefficient. Thus, even in a high temperature environment, the shape change (i.e., an expansion) of the first and second guide members, and a subsequent forced pulling of the sheet body portion are inhibited, thereby restraining an occurrence of a crease in the sheet body portion.

Each of the first and second guide members is formed into an arc shape in a cross section by protruding in a height direction perpendicular to a plane surface defined by the moving direction of the sheet and the width direction. In addition, the wire rod includes first and second wire rods arranged at intermediate portions between a circumferential center portion and circumferential end portions of each of the first and second guide members in the cross section.

The first and second wire rods are arranged at the intermediate portions between the circumferential center portion and the respective circumferential end portions of each of the first and second guide members. As a result, the first and second guide members are inhibited from bending in the height direction or in a direction opposite from the height direction of the arc-shaped cross section by an excessive displacement of both ends of each of the first and second guide members in the moving direction.

The first and second wire rods are symmetrically arranged in the circumferential direction of each of the first and second guide members in the cross section.

Accordingly, the shape change of the first and second guide members in the moving direction thereof because of the environmental change may be restrained in a balanced manner in the circumferential direction of the first and second guide members in the cross section.

Each of the first and second guide members is slidably in contact with each of the first and second guide rails at the circumferential end portions in the cross section, and the circumferential end portions are molded by a first material having a smaller sliding resistance than a second material forming the other portion of each of the first and second guide members sandwiched between the circumferential end portions in the cross section.

Accordingly, the first and second guide members (the sheet) are smoothly movable along the respective first and second guide rails.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view of a vehicle roof to which a roller shade apparatus for a vehicle according to an embodiment disclosed here is applied;
Fig. 2 is perspective view of the roller shade apparatus according to the embodiment;
Fig. 3 is cross-sectional view of the roller shade apparatus according to the embodiment;
Fig. 4 illustrates a plan view, a cross-sectional view, and an enlarged view of a sheet of the roller shade apparatus when the sheet is in a deployed state;
Fig. 5 is a graph illustrating a relationship between an arrangement of a wire and a bending amount of a guide member of the sheet; and
Fig. 6 is an explanatory view of an occurrence of a crease in the sheet according to a known roller shade apparatus.

### DETAILED DESCRIPTION

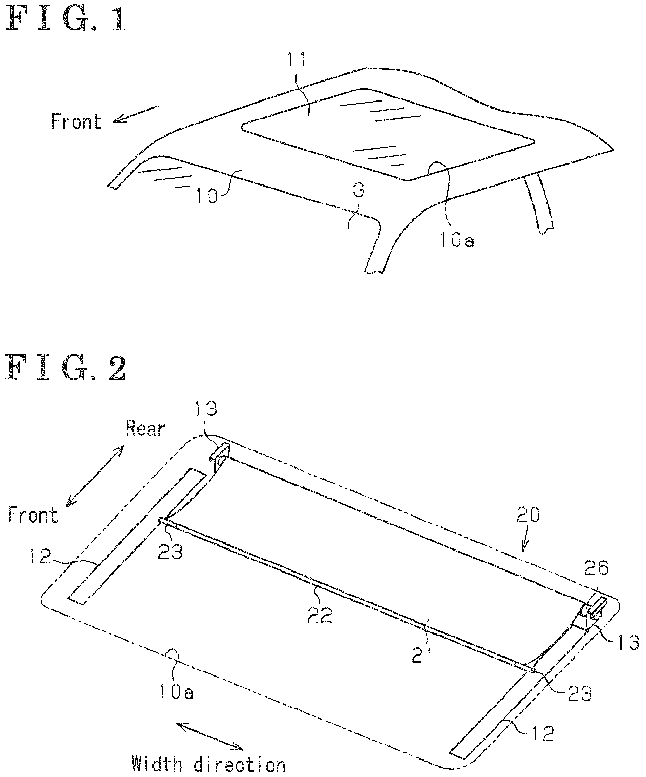

An embodiment will be explained with reference to Figs. 1 to 5. In the embodiment, directions and orientations such as left, right, front, rear, top, and bottom correspond to those when viewed from a passenger seated in a vehicle. As illustrated in Fig. 1, a roof opening portion 10a serving as an opening portion and substantially having a rectangular shape is formed at a vehicle roof 10 for an automobile, for example. In addition, a roof panel 11 made of glass and serving as a transparent member, the transparent member forming a transparent range at the roof opening portion 10a, is mounted to the vehicle roof 10.

As illustrated in Fig. 2, a pair of guide rails 12 serving as first and second guide rails is arranged at respective side edges of the roof opening portion 10a in a width direction of the vehicle so as to extend in a longitudinal direction of the vehicle. The pair of guide rails 12 is made of an extruded material such as aluminum alloy. A pair of brackets 13 made of metal, for example, is provided at a rear side of the pair of guide rails 12. A roller shade apparatus 20 is supported by the pair of brackets 13. Specifically, the roller shade apparatus 20 includes a roller shaft 26 substantially having a cylindrical shape and extending in the width direction of the vehicle. The roller shade apparatus 20 is supported by the brackets 13 at both end portions of the roller shaft 26 in the width direction of the vehicle.

A first end of a sheet 21 provided for light shielding is fixed to an outer peripheral portion of the roller shaft 26. A second end of the sheet 21 is fixed to a garnish 22 extending in the width direction of the vehicle. A pair of shoes 23 is provided at both end portions of the garnish 22 in the width direction of the vehicle so as to extend in the width direction. The shoes 23 are attached to the respective guide rails 12 so as to be movable in a longitudinal direction of the guide rails 12. The guide rails 12 support respective side portions of the sheet 21 in the width direction to be guided in the moving direction of the sheet 21.

Both of the shoes 23 together with the garnish 22 move forward along the guide rails 12 so that the sheet 21 is fed and deployed to cover the roof panel 11 (i.e., the sheet 21 moves in a second direction). In addition, the sheet 21 is wound (i.e., the sheet 21 moves in a first direction) so that both of the shoes 23 together with the garnish 22 move rearward along the guide rails 12 to cause the roof panel 11 to be exposed. The roller shaft 26 includes a biasing member such as a torsion spring so as to constantly bias the sheet 21 in a direction to be wound.

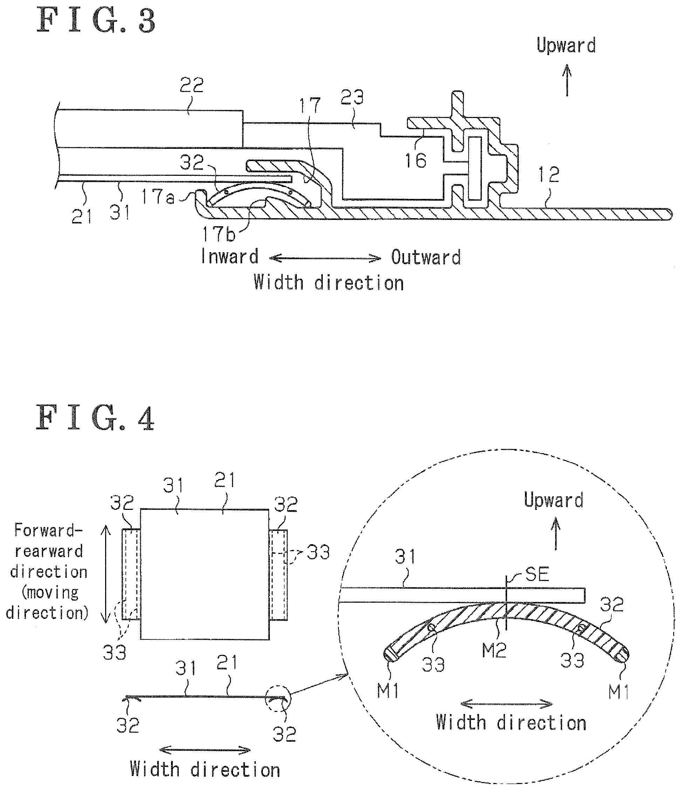

Next, a movement of the sheet 21 guided by the guide rails 12 at the time of the feeding or winding of the sheet 21 will be explained. As illustrated in Fig. 3, each of the guide rails 12 includes a first guide portion 16 substantially having a laterally-facing U-shape in a cross section opening towards an inner side in the width direction of the vehicle. The movement of the shoes 23 in the longitudinal direction of the vehicle is guided by the first guide portions 16 of the respective guide rails 12. Each of the guide rails 12 also includes a second guide portion 17 arranged adjacent to the first guide portion 16 so as to be positioned to the inner side in the width direction of the vehicle relative to the first guide portion 16. The second guide portion 17 includes a laterally-facing U-shape in a cross section opening towards the inner side in the width direction of the vehicle. The second guide portion 17 includes a restriction piece 17a having a flange shape and a guide projection 17b having a half-semicircular shape. The restriction piece 17a is upwardly bent from an inner end of a bottom wall of the second guide portion 17 in the width direction. The guide projection 17b, which upwardly projects from the bottom wall of the second guide portion 17, is arranged to an outer side of the bottom wall in the width direction while having a peak portion positioned at substantially a center in the width direction.

As illustrated in Figs. 3 and 4, the sheet 21 includes a sheet body portion 31 made of fabric and deployable so as to cover the roof panel 11 at a time of the feeding of the sheet 21. The sheet 21 also includes a pair of guide members 32 serving as first and second guide members and connected to the respective side portions of the sheet body portion 31 in the width direction of the vehicle. Each of the guide members 32 is formed by a resin plate member substantially having a 0.8 mm thickness, for example, as illustrated in an enlarged view in Fig. 4. The guide member 32 is formed into an arc shape in a cross section (an arc-shaped cross section) while upwardly protruding (i.e., protruding in a height direction perpendicular to a plane surface defined by the moving direction of the sheet 21 and the width direction of the vehicle). The guide members 32 extend in the moving direction of the sheet 21. The guide members 32 are connected to the respective side portions of the sheet body portion 31 in the width direction. Specifically, an upper portion of each of the guide members 32 positioned at the center in the width direction is connected to each of the side portions of the sheet body portion 31. According to the embodiment, the upper portion of each of the guide members 32 is connected to the side portion of the sheet body portions 31 via a stitching with a thread, for example. In Fig. 4, a connected portion between each of the guide members 32 and the sheet body portion 31 is illustrated by a stitching portion SE. A pair of wires 33 each serving as a wire rod is embedded in each of the guide members 32. Specifically, two of the wires 33 serving as first and second wire rods are arranged at substantially intermediate portions serving as intermediate portions between a circumferential center portion and respective circumferential end portions (first and second end portions) of the guide member 32 in the cross section so that the wires 33 are arranged symmetrical to each other relative to the circumferential center portion in the cross section. Each of the wires 33 extends over the entire length of the guide members 32 in the moving direction thereof. The wire 33 has a relatively smaller linear expansion coefficient to thereby restrain a shape change (expansion and contraction) of the guide members 32 in the moving direction thereof caused by an environmental change. Each of the wires 33 is made of brass wire substantially having a 0.25 mm diameter so that the wire 33 includes a strength not to influence the winding of the sheet 21 at the roller shaft 26.

As illustrated in Fig. 3, an inner end (the first end) of each of the guide members 32 of the sheet 21 in the width direction engages with the restriction piece 17a of the second guide portion 17. In addition, a lower surface of each of the guide members 32 faces the guide projection 17b. The guide member 32 is movably attached to the second guide portion 17 in the aforementioned manner. As a result, because of the restriction piece 17a, the guide member 32 that is pulled by a tensile force of the sheet body portion 31 is restrained from disengaging from the second guide portion 17 to the inner side in the width direction of the vehicle. In addition, the guide member 32 that is wound by the roller shaft 26 is enhanced to return to the arc shape in the cross section by an interference with the guide projection 17b.

Each of the guide members 32 is slidably in contact with each of the guide rails 12 at the circumferential end portions in the cross section (the first and second end portions). As illustrated by the enlarged view in Fig. 4, each of the guide members 32 is extrusion molded by two different resin materials (for example, TPO: thermoplastic polyolefin elastomer). Specifically, the first and second end portions of the guide member 32 are each extrusion molded by a first material M1 while the other portion of the guide member 32 sandwiched between the first and second end portions is extrusion molded by a second material M2. The first material M1 forming the first and second end portions of the guide member 32 includes a smaller sliding resistance than the second material M2 forming the other portion of the guide member 32.

According to the present embodiment, arrangements of the wires 33 at the guide members 32 are optimally determined. Specifically, an extrusion molding material W for each of the guide members 32 that is cut into a length of 200 mm is placed in hot water at 80 degrees C for 3 minutes and is then treated with cold water at 18 degrees C. A bending amount of the extrusion molding material W is then measured.

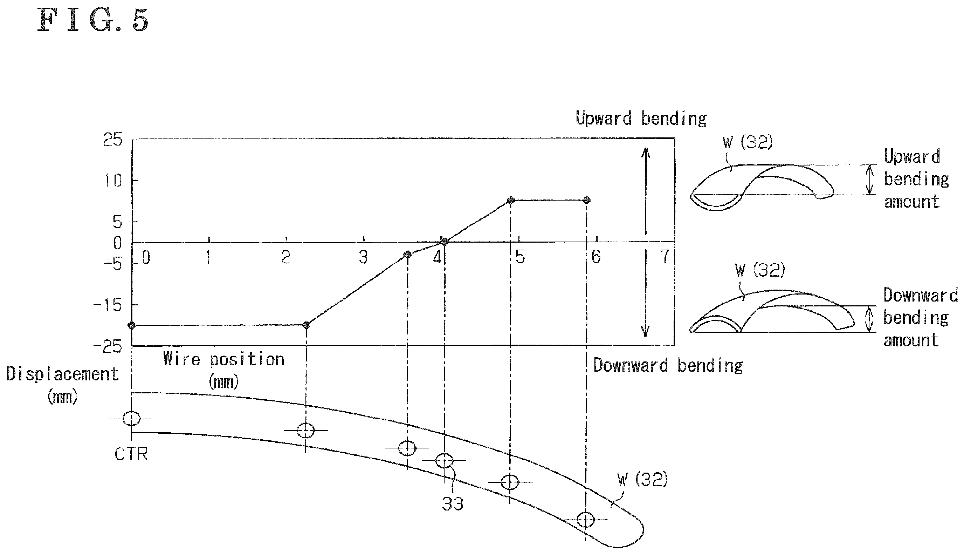

As illustrated in Fig. 5, in a case where the wire 33 is arranged at the circumferential center portion of the guide member 32 (the extrusion molding material W) in the cross section, it is confirmed that the guide member 32 is bent so that both ends of the guide member 32 in the moving direction thereof are displaced downwardly (i.e., displaced in a direction opposite from the protruding direction of the arc-shaped cross section of the guide member 32). The aforementioned bending of the guide member 32 is defined to be a downward bending. An amount of such bending (i.e., a downward bending amount) is indicated by a negative number (displacement) in Fig. 5. In a high temperature environment, for example, the shape change in the circumferential center portion of the guide member 32 in the cross section is restrained. However, the shape change occurs at the first and second end portions (the circumferential end portions in the cross section) of the guide member 32 so that the first and second end portions are expanded, thereby causing the aforementioned downward bending of the guide member 32.

On the other hand, in a case where the wire 33 is arranged at each of the circumferential end portions of the guide member 32 (the extrusion molding material W) in the cross section, it is confirmed that the guide member 32 is bent so that the both ends of the guide member 32 in the moving direction thereof are displaced upwardly (i.e., displaced in the protruding direction of the arc-shaped cross section). The aforementioned bending of the guide member 32 is defined to be an upward bending. An amount of such bending (i.e., an upward bending amount) is indicated by a positive number (displacement) in Fig. 5. In the high temperature environment, for example, the shape change in the circumferential end portions of the guide member 32 is restrained, however, the shape change occurs at the circumferential center portion so that the circumferential center portion is expanded, thereby causing the aforementioned upward bending of the guide member 32.

In consideration of the aforementioned matter, the wires 33 are arranged so that the bending amount (the upward bending amount and the downward bending amount) of the guide member 32 becomes zero. Specifically, two of the wires (pair of wires) 33 are arranged away from the circumferential center portion of the guide member 32 by 4.05 mm towards the respective circumferential end portions.

An operation of the roller shade apparatus 20 according to the present embodiment will be explained. According to the roller shade apparatus 20 of the present embodiment, both of the shoes 23 together with the garnish 22 move forward along the guide rails 12 so that the roller shaft 26 is rotated in one direction against the biasing force of the biasing member to thereby feed and deploy the sheet 21 that is in a wound state. At this time, both of the guide members 32 move forward while sliding relative to the second guide portions 17 of the respective guide rails 12. As a result, the sheet body portion 31 is deployed to cover the roof panel 11. On the other hand, the roller shaft 26 rotates in the other direction by the biasing force of the biasing member so that both of the shoes 23 together with the garnish 22 move rearward along the guide rails 12. The sheet 21 in a deployed state (in a fed state) is wound accordingly. At this time, both of the guide members 32 move rearward while sliding relative to the second guide portions 17 of the guide rails 12. As a result, the sheet body portion 31 is stored to cause the roof panel 11 to be exposed.

Specifically, in the deployed state of the sheet 21, the possible shape change (expansion and contraction) of the guide members 32 in the moving direction thereof caused by the environmental change is restrained by the wires 33 having the relatively smaller linear expansion coefficient. Thus, even in the high temperature environment, the shape change (i.e., the expansion) of both of the guide members 32, and the subsequent forced pulling of the sheet body portion 31 may be restrained.

According to the aforementioned embodiment, the wires 33 are arranged and embedded in the guide members 32 over the entire length in the moving direction thereof. Therefore, the possible shape change (expansion and contraction) of the guide members 32 in the moving direction thereof caused by the environmental change is restrained by the wires 33 having the relatively smaller linear expansion coefficient. Thus, even in the high temperature environment, the shape change (i.e., the expansion) of both of the guide members 32 and the subsequent forced pulling of the sheet body portion 31 are inhibited, thereby restraining an occurrence of a crease in the sheet body portion 31 and improving the appearance thereof.

In addition, according to the aforementioned embodiment, two of the wires 33 are symmetrically arranged at the intermediate portions between the circumferential center portion and the respective circumferential end portions of the guide member 32 in the cross section. Thus, an excessive upward or downward displacement (i.e., an excessive displacement in the height direction or in the opposite direction thereof) of the both ends of the guide member 32 in the moving direction is avoidable.

Further, according to the aforementioned embodiment, the pair of wires 33 is symmetrically arranged in the circumferential direction of the guide member 32 in the cross section. Thus, the shape change (expansion and contraction) of the guide member 32 in the moving direction thereof because of the environmental change may be restrained in a balanced manner in the circumferential direction of the guide member 32 in the cross section.

Further, according to the aforementioned embodiment, each of the guide members 32 is formed by two different resin materials. That is, the first and second end portions (the circumferential end portions in the cross section) of the guide member 32 are formed by the first material M1 and the other portion of the guide member 32 sandwiched between the first and second end portions in the cross section is formed by the second material M2. Then, each of the guide members 32 is slidably in contact with each of the guide rails 12 (specifically, the second guide portion 17) at the first and second end portions. The first material M1 forming the first and second end portions of the guide member 32 has the relatively smaller sliding resistance than the second material M2. Thus, the guide members 32 (the sheet 21) are smoothly movable along the respective guide rails 12.

According to the aforementioned embodiment, because the guide members 32 are made of the extrusion molding material W, a case where the length of the sheet body portion 31 in the moving direction thereof is changed may be easily handled.

In a case where the upward bending amount or the downward bending amount of the guide member 32 is excessively large, the stitching between the sheet body portion 31 and the guide member 32 at the stitching portion SE may be difficult. However, according to the present embodiment, two of the wires 33 are symmetrically arranged in the circumferential direction at the guide member 32. As a result, the upward bending amount or the downward bending amount after the guide member 32 is extrusion molded (an example of the high temperature environment) is restrained. The stitching between the sheet body portion 31 and each of the guide members 32 may be easily conducted accordingly.

The aforementioned embodiment may be modified as follows. The wire 33 may be arranged at the circumferential center portion or the circumferential end portion of the guide member 32 in the cross section. Specifically, in a case where the wire 33 is arranged at the circumferential center portion, the wire 33 may disturb the stitching between the sheet body portion 31 and the guide member 32. In such case, the sheet body portion 31 and the guide member 32 may be connected by adhesive, for example. In addition, the number of wires 33 arranged and embedded in each of the guide members 32 may be one, three or more.

Each of the guide members 32 may have a flat belt shape. The feeding of the sheet 21 from the roller shaft 26 may be either electrically performed or manually performed, for example.

The roller shade apparatus 20 may be supported at a front edge of the roof opening portion 10a so that the sheet 21 is fed rearward. In addition, the roller shade apparatus 20 may be provided at a windshield G (see Fig. 1), a side glass, or a rear glass, for example, serving as the transparent member.

## Claims

1. A roller shade apparatus for a vehicle (20), comprising:
a sheet (21) provided for light shielding, the sheet (21) moving in a first direction and being wound to cause a transparent member (11) forming a transparent range at an opening portion (10a) of the vehicle to be exposed, the sheet (21) moving in a second direction opposite from the first direction and being deployed to cover the transparent member (11);
first and second guide rails (12) provided at respective side edges of the opening portion (10a) in a width direction perpendicular to a moving direction of the sheet (21), the first and second guide rails (12) extending in the moving direction of the sheet (21), the first and second guide rails (12) supporting respective side portions of the sheet (21) in the width direction to be guided in the moving direction of the sheet (21);
the sheet (21) including a sheet body portion (31) being deployable to cover the transparent member (11) in a case where the sheet (21) is fed, and first and second guide members (32) made of resin, the first and second guide members (32) being connected to the respective side portions of the sheet (12) and being movably attached to the first and second guide rails (12),
**characterized in that**
a wire rod (33) made of metal and embedded in each of the first and second guide members (32) over an entire length of the first and second guide members (32) in the moving direction.

2. The roller shade apparatus (20) according to claim 1, wherein each of the first and second guide members (32) is formed into an arc shape in a cross section by protruding in a height direction perpendicular to a plane surface defined by the moving direction of the sheet (21) and the width direction, and the wire rod (33) includes first and second wire rods (33) arranged at intermediate portions between a circumferential center portion and circumferential end portions of each of the first and second guide members (32) in the cross section.

3. The roller shade apparatus (20) according to claim 2, wherein the first and second wire rods (33) are symmetrically arranged in the circumferential direction of each of the first and second guide members (32) in the cross section.

4. The roller shade apparatus (20) according to either claim 2 or 3, wherein each of the first and second guide members (32) is slidably in contact with each of the first and second guide rails (12) at the circumferential end portions in the cross section, and the circumferential end portions are molded by a first material (M1) having a smaller sliding resistance than a second material (M2) forming the other portion of each of the first and second guide members (32) sandwiched between the circumferential end portions in the cross section.

## Patentansprüche

1. Sonnenrollo für ein Fahrzeug (20), mit
einer Bahn (21), welche zur Lichtabschirmung vorgesehen ist, wobei sich die Bahn (21) in einer ersten Richtung bewegt und gewunden wird, um zu verursachen, dass ein transparentes Teil (11), welches einen transparenten Bereich an einem Öffnungsabschnitt (10a) des Fahrzeugs ausbildet, offen ist, wobei sich die Bahn (21) in einer zweiten Richtung entgegengesetzt zur ersten Richtung bewegt und dazu genutzt wird, das transparente Teil (11) abzudecken;
ersten und zweiten Führungsschienen (12), welche an jeweiligen Seitenkanten des Öffnungsabschnitts (10a) in einer Breitenrichtung senkrecht zu einer Bewegungsrichtung der Bahn (21) vorgesehen sind, wobei sich die ersten und zweiten Führungsschienen (12) in der Bewegungsrichtung der Bahn (21) erstrecken, die ersten und zweiten Führungsschienen (12) die jeweiligen Seitenabschnitte der Bahn (21) in der Breitenrichtung lagern, um in der Bewegungsrichtung der Bahn (21) geführt zu sein; wobei
die Bahn (21) einen Bahnkörperabschnitt (31), welcher zur Abdeckung des transparenten Teils (11) nutzbar ist, in einem Fall, in dem die Bahn (21) zugeführt wird, und erste und zweite aus Harz hergestellte Führungsteile (32) beinhaltet, wobei die ersten und zweiten Führungsteile (32) mit den jeweiligen Seitenabschnitten der Bahn (21) verbunden sind und bewegbar an den ersten und zweiten Führungsschienen (12) befestigt sind,
**dadurch gekennzeichnet, dass**
ein aus Metall bestehender Walzdraht (33) in jeder der ersten und zweiten Führungsteile (32) über eine gesamte Länge des ersten und zweiten Führungsteils (32) in der Bewegungsrichtung eingebettet ist.

2. Sonnenrollo (20) gemäß Anspruch 1, wobei jedes der ersten und zweiten Führungsteile (32) durch Vorstehen in einer Höhenrichtung senkrecht zu einer Planfläche, welche durch die Bewegungsrichtung der Bahn (21) und der Breitenrichtung definiert ist, in einem Querschnitt bogenförmig ausgebildet ist, und der Walzdraht (33) erste und zweite Walzdrähte (33) beinhaltet, welche an Zwischenabschnitten zwischen einem Umfangsmittenabschnitt und Umfangsendabschnitten von jedem der ersten und zweiten Führungsteile (32) in dem Querschnitt angeordnet sind.

3. Sonnenrollo (20) gemäß Anspruch 2, wobei die ersten und zweiten Walzdrähte (33) in der Umfangrichtung von jedem der ersten und zweiten Führungsteile im Querschnitt symmetrisch angeordnet sind.

4. Sonnenrollo (20) gemäß entweder Anspruch 2 oder 3, wobei jedes der ersten und zweiten Führungsteile (32) gleitend mit jedem der ersten und zweiten Führungsschienen (12) an den Umfangsendabschnitten in dem Querschnitt in Berührung ist, und die Umfangsendabschnitte aus einem ersten Material (M1) ausgeformt sind, welches einen kleineren Gleitwiderstand aufweist als ein zweites Material (M2), das den anderen Abschnitt von jedem der ersten und zweiten Führungsteile (32) ausbildet, und zwischen den Umfangsendabschnitten in dem Querschnitt eingeschoben ist.

## Revendications

1. Appareil de store enrouleur pour un véhicule (20) comprenant :
une feuille (21) prévue pour protéger de la lumière, la feuille (21) se déplaçant dans une première direction et étant enroulée pour provoquer l'exposition d'un élément transparent (11) formant une plage transparente au niveau d'une partie d'ouverture (10a) du véhicule, la feuille (21) se déplaçant dans une seconde direction opposée à la première direction et étant déployée pour recouvrir l'élément transparent (11) ;
des premier et second rails de guidage (12) prévus au niveau des bords latéraux respectifs de la partie d'ouverture (10a) dans une direction de largeur perpendiculaire à une direction de déplacement de la feuille (21), les premier et second rails de guidage (12) s'étendant dans la direction de déplacement de la feuille (21), les premier et second rails de guidage (12) supportant des parties latérales respectives de la feuille (21) dans la direction de largeur à guider dans la direction de déplacement de la feuille (21) ;
la feuille (21) comprenant une partie de corps de feuille (31) qui est déployée pour recouvrir l'élément transparent (11) dans un cas dans lequel la feuille (21) est alimentée, et des premier et second éléments de guidage (32) réalisés à partir de résine, les premier et second éléments de guidage (32) étant raccordés aux parties latérales respectives de la feuille (12) et étant fixés de manière mobile aux premier et second rails de guidage (12),
**caractérisé en ce que** :
un fil machine (33) est réalisé à partir de métal et est encastré dans chacun des premier et second éléments de guidage (32) sur toute la longueur des premier et second éléments de guidage (32) dans la direction de déplacement.

2. Appareil de store enrouleur (20) selon la revendication 1, dans lequel chacun des premier et second éléments de guidage (32) est formé selon une forme d'arc dans une section transversale en faisant saillie dans une direction de hauteur perpendiculaire à une surface de plan définie par la direction de déplacement de la feuille (21) et le direction de largeur, et le fil machine (33) comprend des premier et second fils machines (33) agencés au niveau de parties intermédiaires entre une partie centrale circonférentielle et des parties d'extrémité circonférentielles de chacun des premier et second éléments de guidage (32) dans la section transversale.

3. Appareil de store enrouleur (20) selon la revendication 2, dans lequel les premier et second fils machines (33) sont agencés symétriquement dans la direction circonférentielle de chacun des premier et second éléments de guidage (32) dans la section transversale.

4. Appareil de store enrouleur (20) selon la revendication 2 ou 3, dans lequel chacun des premier et second éléments de guidage (32) est en contact de manière coulissante avec chacun des premier et second rails de guidage (12) au niveau des parties d'extrémité circonférentielles dans la section transversale, et les parties d'extrémité circonférentielle sont moulées par un premier matériau (M1) ayant une plus petite résistance au coulissement qu'un second matériau (M2) formant l'autre partie de chacun des premier et second éléments de guidage (32) pris en sandwich entre les parties d'extrémité circonférentielles dans la section transversale.
